Europäisches Patentamt

European Patent Office

Office européen des brevets

(11) Publication number: **0 483 467 A2**

# EUROPEAN PATENT APPLICATION

(21) Application number: **91113501.0**

(22) Date of filing: **12.08.91**

(51) Int. Cl.5: **H04N 9/64**

(30) Priority: **31.10.90 IT 2194690**

(43) Date of publication of application:
**06.05.92 Bulletin 92/19**

(84) Designated Contracting States:
**AT BE CH DE DK ES FR GB GR IT LI LU NL SE**

(71) Applicant: **GRAFITE S.R.L.**
**Via Cadorna 9**
**I-20059 Vimercate (Milano)(IT)**

(72) Inventor: **Dodson, Tom**
**1912 Benita Drive, 3**
**Rancho Cordova, CA 95670(US)**

(74) Representative: **Modiano, Guido et al**
**MODIANO, JOSIF, PISANTY & STAUB**
**Modiano & Associati Via Meravigli, 16**
**I-20123 Milano(IT)**

(54) Color graphics conversion device particularly for converting video signals output by graphics stations into television signals.

(57) Color graphics conversion device particularly for converting video signals output by graphics stations into television signals, which comprises a container or cabinet provided with input connectors for video signals output by electronic computers, and output connectors towards television monitors or television recording means. The container accommodates a power supply of a mother board provided with a standard connection bus. Said connection bus comprises connection slots for standard-format cards, each card being provided with a respective standard finger connector for connection to said slots. The device comprises at least one analog sample card which comprises at least three sampling lines, one for each primary color of at least one signal in input on the input connector. The analog sample card emits at least three output signals which constitute the input to a memory card. Said memory card comprises a volatile memory element for storing the at least three signals in input to the memory card. The volatile memory elements are driven by means for addressing the signals. The memory card emits output signals toward an output control card which, starting from the at least three input signals in the primary colors, emitting them toward video conversion means. Processing means are furthermore provided, which are connected to the connection bus, and the processing means are connected to non-volatile memory elements within which means for the program-based control of the cards and configuration means for the input connectors and for the output connectors are stored.

Fig.1

The present invention relates to a color graphics conversion device particularly for converting video signals output by graphics stations into television signals.

The capability and the possibility of generating highly sophisticated, high-resolution graphic images have increased considerably in recent years, and the need to provide permanent recordings of these images which can furthermore be easily used in any occasion has developed proportionally. It has therefore become necessary to develop conversion technologies which have characteristics of high graphics quality and high compatibility with the most widespread video standards (NTSC, PAL and others). Among the various possible methods, the frequency transcoding of an analog video signal allows the greatest possibility of connecting graphics systems to currently existing video equipment, since this method is free from software compatibility restrictions. Graphics station users, or rather computer-graphics operators, furthermore currently generally produce images of very high quality in terms of both color and resolution, and a transcoding which converts the generated image into the standard television signal with the maximum possible fidelity is therefore indispensable. The field of application of these transcoding devices is extremely wide: in fact it comprises all graphics applications used by advertising on one hand and by industry in both design and functional simulation, such as for example flight simulators, driving simulators and the like, on the other.

A first technical problem to be overcome is linked to the conversion of the video format used by graphics stations into a composite television format (in PAL for Europe, in NTSC for the USA, and the like). This conversion is not extremely simple since, with reference to PAL standard characteristics (but the problems are similar for any other video standard), any advanced graphics station produces an image which has a higher video resolution and a different scanning rate, both of which must therefore be converted to the appropriate values defined by the standard itself.

The first scan converters performed a normal sampling of the high-resolution image, making it compatible with the PAL scanning structure and then discarding the remaining part of the signal. The results obtained were anything but satisfactory, since the reproduced image was only a part of the source image, and often was also the least significant part thereof. This disadvantage was overcome by devices which although they displayed computer-generated images in a clear and flicker-free manner on video, were often excessively bulky and expensive, especially from the point of view of use and maintenance.

Though the necessary investment level has not been reduced substantially, anyone can currently prepare documentaries to he produced for training, documentation or for advertising work using a scan converter connected to a video recorder. Furthermore, one of the characteristics provided by scan converters is the possibility of combining images taken from the real world with images generated by a graphics station, thus improving the overall graphical image of the finished product.

From a historical point of view, computer graphics, and in particular monitors for graphics stations, have markedly shifted away from television technology in order to produce more stable images with higher resolution. From a technical standpoint, an analog computer-generated signal which differs substantially from a television signal, such as for example the PAL video composite signal, has been reached.

From a technical point of view, the easiest and most straightforward method for converting a video signal generated by a graphics station into a television signal is to shoot, after the appropriate optical adjustments, a monitor of a graphics station with a cinecamera or a video camera. The use of a cinecamera in any case leaves the problem of subsequent transfer from film to videocassette or to any other support for video use. The use of a video camera, which is in any case the most invasive and imprecise, makes indispensable the action of professional personnel capable of overcoming problems on the converted signal, such as the unfortunately well-known roll bars, the loss of color saturation and the geometrical distortion of the images.

As an alternative to the video camera there is the scan converter. This device is connected directly to the computer by using the same standard RGB (Red Green Blue) signals. These signals are first digitized, usually with a 24-bit color resolution (three signals of 8 bits each), then processed and stored. The image is finally reconverted into RGB analog signals and coded in the PAL (Europe) or NTSC (United States) video standards. Most scan converters perform conversion and coding in real time. The output signal is sent directly to the video recorder without using a video camera.

Unfortunately, certain items of graphic information are lost during the conversion of the high-resolution RGB signal into a lower-resolution video signal. As mentioned, the first scan converters skipped data lines to adapt the high-resolution signal to the lower-resolution video signal, whereas most modern converters currently average the data on all the lines into a lower-resolution video signal. Though it significantly reduces the loss of graphic information, this conversion method has limits related to flicker and jitter.

Among the functions which scan converters must have, one must bear in mind that the market requires freeze-frame for freezing an image; aspect ratio correction, in order to achieve the correct 4:3 aspect ratio of a PAL television monitor; color bars for calibrating other video equipment. The above listed functions allow any user of scan converters to generate good documentaries, or in any case short- or medium-length programs, based on a video support, such as magnetic tape or a video disk, without the aid of specialized technicians or other auxiliary equipment or post-production services.

Most scan converters work with a wide range of computer monitors comprised within a specified range of horizontal scanning rates which is usually comprised between 30 and 80 kilohertz (equivalent, in terms of resolution, to the range comprised between 640x480 and 1280x1024 pixels). A converter is currently usually configured during manufacture for a preset scanning rate (e.g. 60 kilohertz); the intervention of a specialized technician is currently necessary in order to reconfigure it for a different scanning rate.

Although in recent years the performance of scan converters has increased considerably, the demands of the users meet in the fundamental issue that the use of these converters should be possible most of all to non-specialized personnel, so as to allow the production of documentaries of various lengths even to personnel having no knowledge at all in the field of video production.

In the various currently commercially available converters there is a predominance of hardware-controlled functions with respect to software-controlled ones. This fact constitutes a considerable limit to the integration of these converters in existing information-processing situations. Many converters furthermore do not directly offer a wide range of video signals to which connection is possible, thus causing the need to replace the converter to be used if the field within which the various items of equipment employed operate is modified. Another limitation is furthermore constituted by the usual impossibility of the self-locking of the converter to the input signal and by the scarce possibility of storing connection files for multi-user connections. These typical disadvantages are caused by the predominance of hardware over software and can be solved exclusively with the intervention of specialized technicians who modify the hardware configuration of the machine every time almost minimal modifications of the configuration and/or of the setting of the known scan converter are required.

The industrial situations in which scan converters are involved are extremely variable and include a wide variety of graphics stations, usually of different types, and therefore with highly mutually differentiated types of video signal generated by said graphics stations. In these typical situations, therefore, there is a true problem of compatibility between the converter which is introduced therein and the various already-present information-processing components of the information system.

The aim of the present invention is to eliminate or substantially reduce the disadvantages described above in known types of scan converters by providing a color graphics conversion device which can be connected automatically to all of the analog video signals currently commercially available.

Within the scope of the above described aim, an object of the present invention is to provide a color graphics conversion device which completely eliminates hardware dependence related to its configuration.

Another object of the present invention is to provide a color graphics conversion device which is easy to use for a user having no knowledge of video techniques.

A further object of the present invention is to provide a color graphics conversion device which directly controls devices for recording video images on appropriate supports.

Not least object of the present invention is to provide a color graphics conversion device particularly for converting video signals output by graphics stations into television signals which is relatively easy to produce and at competitive costs.

This aim, the objects mentioned and others which will become apparent hereinafter are achieved by a color graphics conversion device particularly for converting video signals output by graphics stations into television signals, according to the invention, which comprises a cabinet which has at least one input connector, a plurality of output connectors and at least one serial connector for connection to electronic computers for driving said device, a keypad for data entry on the part of an operator and a message display, said cabinet accommodating a power supply of a mother board provided with a standard connection bus, said connection bus comprising a plurality of connection slots for standard-format cards, each card being provided with a respective standard finger connector for connection to said slots, characterized in that it comprises at least one analog sample card which comprises at least three sampling lines, one for each primary color of at least one signal in input on said input connector, said analog sample card emitting at least three output signals which constitutes the input to a memory card, said memory card comprising a plurality of volatile memory elements for storing said signals in input to said memory card, said volatile memory elements being driven by means for addressing said signals, said memory card emitting at least twelve output signals toward an output control card which, starting from said at least twelve input signals, is suitable for processing at least three output signals in the primary colors, emitting them toward video conversion means, processing means being provided, said processing means being connected to said connection bus and to non-volatile memory elements within which means for the program-based control of said cards and configuration means for said at least one input connector and for said plurality of output connectors are stored.

Further characteristics and advantages of the invention will become apparent from the description of a preferred but not exclusive embodiment of a color graphics conversion device particularly for converting video signals arriving from graphics stations into television signals, according to the invention, illustrated only by way of non-limitative example in the accompanying drawings, wherein:

    figure 1 is a block diagram of an analog sample card;

    figure 2 is a block diagram of a memory card;

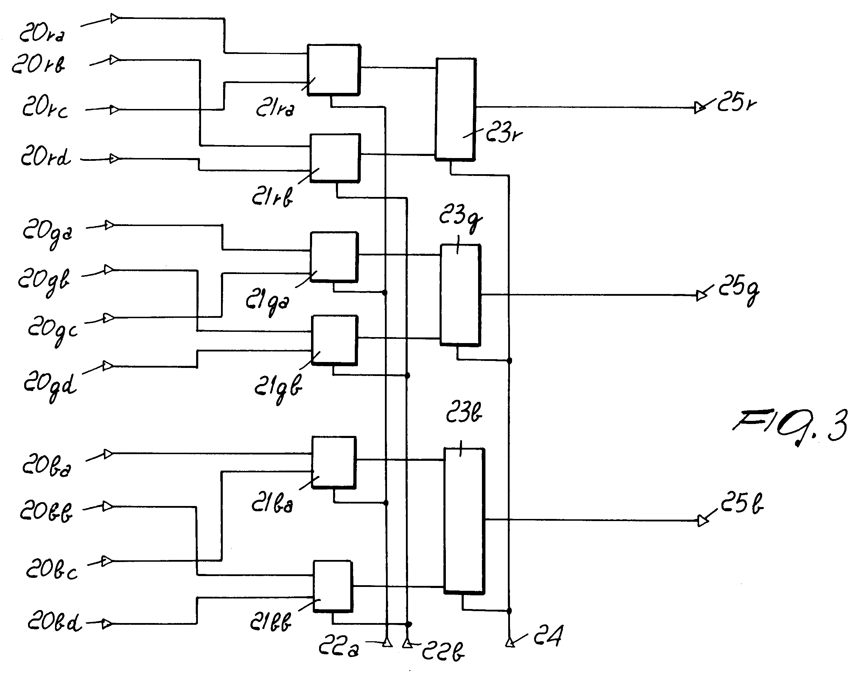

    figure 3 is a block diagram of an output control card;

    figure 4 is a block diagram of a standard conversion card;

    figure 5 is a block diagram of a unit for generating sync and clock signals for the above cards;

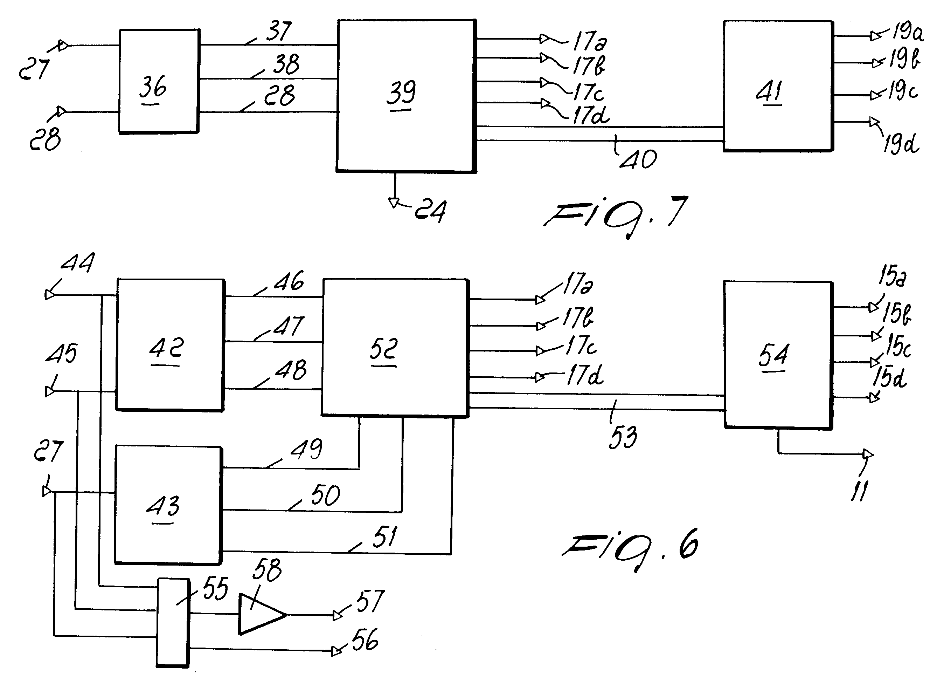

    figure 6 is a block diagram of a memory address generator for input control;

    figure 7 is a block diagram of a memory address generator for output control;

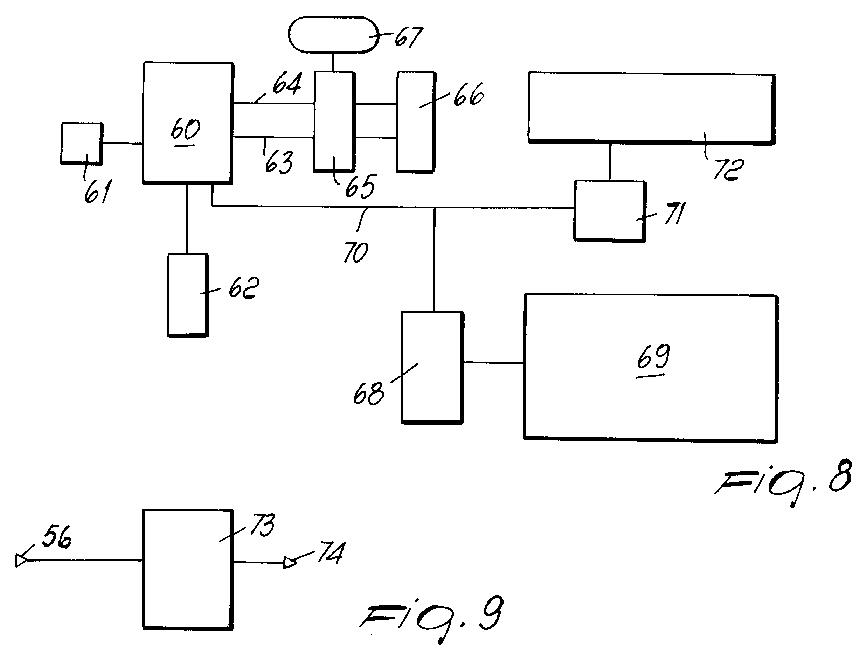

    figure 8 is a block diagram of the data processing means;

    figure 9 is a block diagram of an input sync phase correction circuit;

    figure 10 is a block diagram of a sync generation and latching circuit;

    figure 11 is a block diagram of a color test matrix circuit; and

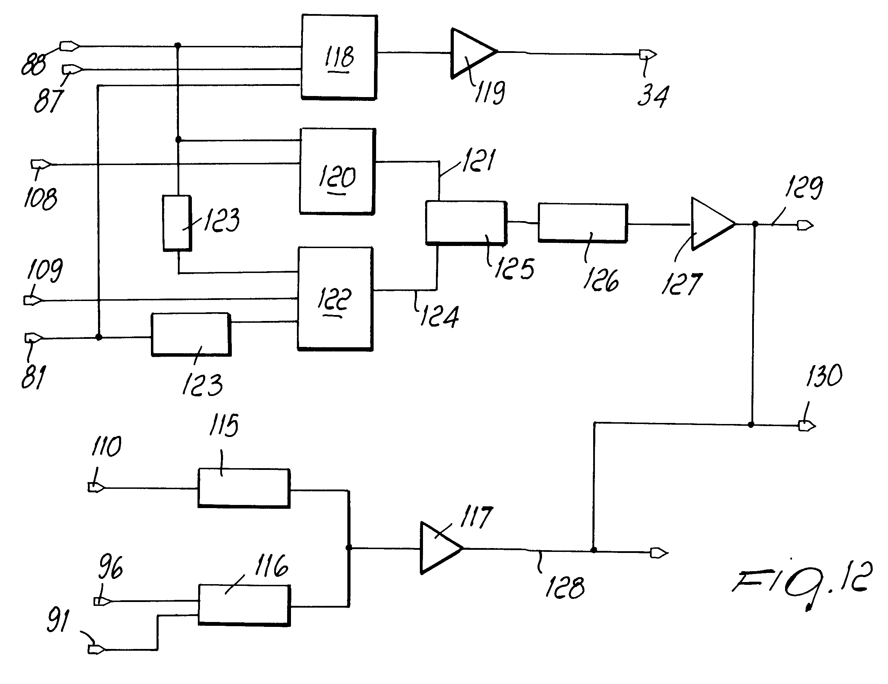

    figure 12 is a block diagram of a luminance and chroma carrier generation circuit.

With reference to the above figures, a color graphics conversion device according to the invention comprises a container or cabinet which is frontally provided with a per se known membrane keypad and with a per se known liquid-crystal display or monitor. The cabinet is provided rearward with at least one input connector, with a plurality of output connectors and with at least two serial connectors of the RS-232 or RS-422 type for connecting the device to electronic computers. The, or each, input connector can be connected to a video output of a graphics station, whereas at least one television monitor in the provided standard or standards and at least one video storage system, such as a videotape or videocassette recorder, a video disk recording station and the like can be connected to the plurality of output connectors.

The cabinet contains a power supply and a mother board, on which a bus of a standard type (VME[R] bus, AT[R] bus, EISA[R] bus MICROCHANNEL[R] bus or the like) is provided. A plurality of card connection slots are mounted on said bus and connected thereto. The characteristic of having a plurality of slots advantageously allows to easily increase the functions of the device according to the invention without performing any hardware modification of the existing cards. Conveniently, the use of a standard bus, and therefore of standard connection slots and finger connectors on the cards, also allows to use these cards inside a host computer if it has the same bus with which the cards are executed, and with the same functions, thus providing an advantageous improvement of the computer and therefore allowing it to be directly connected to at least one external video recording means and to at least one television monitor.

A plurality of cards of the same type or of different types, according to the output or input potentialities of the device, is located inside the cabinet; each card is mounted by means of the associated finger connector in a respective connection slot.

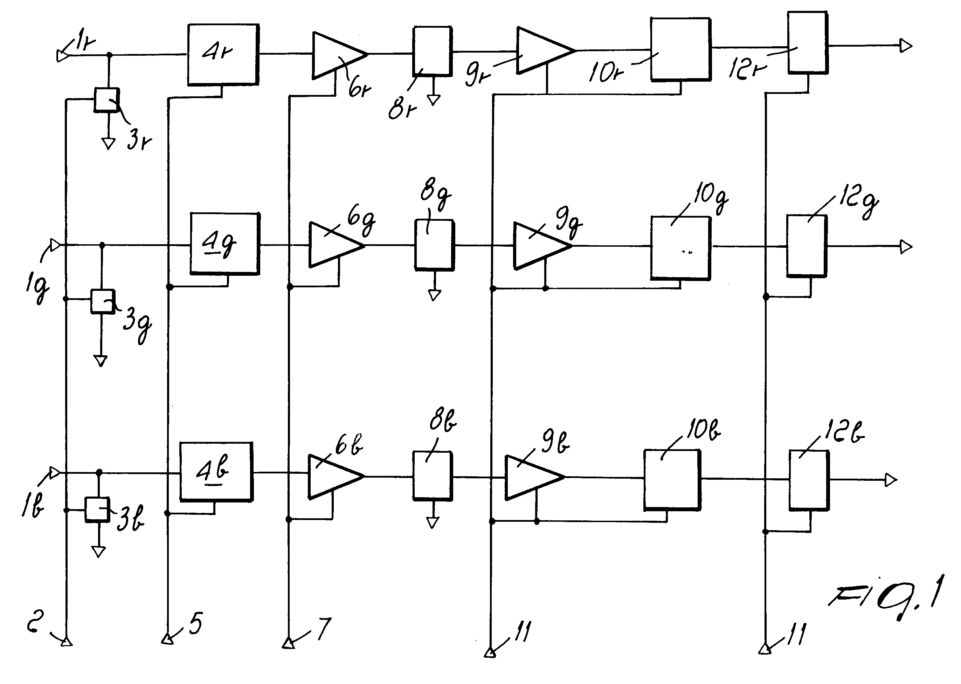

An analog sample card, illustrated in figure 1, is the interface card for converting the analog or digital input signal output by a graphics workstation to the signal levels required by the device according to the invention. The signals output by a graphics workstation can in fact be comprised within a variation range having a minimum value of 0.7 volts peak to peak and a maximum value of 5 volts peak to peak.

The analog sample card comprises, for each input graphics signal, three input terminals 1r, 1g and 1b, i.e. one for each color of the RGB standard (RGB being the acronym of Red, Green and Blue), to which an automatic termination selector 2 is connected; according to the stored configuration, this selector 2, as will become apparent hereinafter, selects for each channel 1r, 1g and 1b a respective 75-ohm signal termination, identified by the reference numerals 3r, 3g and 3b, or a high-impedance value.

Once it has passed through the terminations 3r, 3g and 3b, the signal is input to voltage divide buffers 4r, 4g and 4b, each of which is controlled by an automatic level selector 5. Each voltage divide buffer 4r, 4g and 4b converts the peak-to-peak input voltage into a 1-volt peak-to-peak voltage which is required for correct conversion from an analog signal to a digital signal.

Signal inverters 6r, 6g and 6b are cascade coupled after the voltage divide buffers 4r, 4g and 4b and intervene, under the control of a polarity selector 7, to reverse the polarity of a signal in input to the device if it has a normally inverted polarity.

After the signal inverters 6r, 6g and 6b, each line has a 50-megahertz filter 8r, 8g and 8b to contrast aliasing, i.e. the forming of unwanted trailers, which is well-known from sampling theory. The automatic termination selector 2, the automatic level selector 5 and the polarity selector 7 are handled entirely by the processing means, as will become apparent hereinafter.

After the signal has been filtered, it is input to a cascade composed of analog/digital converters 9r, 9g and 9b and of peak-to-peak samplers 10r, 10g and 10b. The analog/digital converters 9r, 9g and 9b and the peak-to-peak samplers 10r, 10g and 10b are controlled by a sampling clock 11, which provides them with a 100-megahertz sampling frequency (i.e. a sampling period of 10 nanoseconds). The analog/digital conversion converts the analog signal to a digital signal in which each data item has a length of 8 bits, whereas the peak-to-peak samplers 10r, 10g and 10b store the highest value, in absolute terms, among the values output by the respective converters 9r, 9g and 9b, so as to advantageously ensure that all the lines output by the graphics station are kept, without losing any as instead occurs in known scan converters.

Conveniently, the analog/digital converters 9r, 9g and 9b and the peak-to-peak samplers 10r, 10g and 10b are of the high-speed type, in order to maintain the validity of Shannon's theorem and perform conversion and sampling at the horizontal sweep rate of graphics monitors in graphics stations.

Sample latches 12r, 12g and 12b are arranged at the end of the cascade and store the red, green and blue samples in a memory card. The analog/digital conversion and sampling performed by the analog sample card produce at least 768 samples for every video line of each color of each signal, each sample corresponding to a pixel or graphic dot of the acquired line. This value can naturally be increased by using other electronic components inserted on the same card.

The memory card supports a number of volatile memories or RAMs (Random Access Memories) for storing the data output by the analog sample card for each individual color of each individual signal. Each 8-bit sample output by the analog sample card, by means of the inputs 13r, 13g and 13b, is divided into four sub-samples on the respective dividers 14ra, 14rb, 14rc, 14rd related to red, 14ga, 14gb, 14gc, 14gd related to green and 14ba, 14bb, 14bc, 14bd related to blue.

The dividers 14ra, 14ga and 14ba are driven by an input clock 15a, the dividers 14rb, 14gb, 14bb are driven by an input clock 15b, the dividers 14rc, 14gc and 14cc are driven by an input clock 15c and the dividers 14rd, 14gd and 14dd are driven by an input clock 15d. The division of the individual 8-bit samples into 2-bit samples is advantageously performed in order to reduce circuital complexity and most of all to reduce the input clock frequency, or rather to increase the clock interval to improve write safety on the volatile memories.

Since sampling is performed at 100 megahertz, i.e. with a 10-nanosecond sampling period, the division of each sample into sub-samples of 2 bits each allows a fourfold increase in the write time, or rather in the sampling or clock period, by four times, increasing it to 40 nanoseconds, i.e. to a 25-megahertz volatile memory operating frequency. The input clocks 15a, 15b, 15c and 15d control the sending of the sub-sample stored in each divider 14ra, 14rb, 14rc, 14rd, 14ga, 14gb, 14gc, 14gd, 14ba, 14bb, 14bc, 14bd toward respective address generators 16ra, 16rb, 16rc, 16rd, 16ga, 16gb, 16gc, 16gd, 16ba, 16bb, 16bc, 16bd which are driven, with the same connections provided for the dividers, by memory addresses 17a, 17b, 17c and 17d.

The address generators 16ra, 16rb, 16rc, 16rd, 16ga, 16gb, 16gc, 16gd, 16ba, 16bb, 16bc, 16bd address the sub-samples output by the dividers 14ra, 14rb, 14rc, 14rd, 14ga, 14gb, 14gc, 14gd, 14ba, 14bb, 14bc, 14bd, under the control of memory addresses 17a, 17b, 17c and 17d, to memory locations of which the address generators select the address, whereas the twelve sub-samples are sent, after the sub-samples have been read from memory, by sample latches 18ra, 18rb, 18rc, 18rd, 18ga, 18gb, 18gc, 18gd, 18ba, 18bb, 18bc, 18bd. The basic memory size memory is 768 pixels per line for each color by 1024 lines, and can be expanded to accommodate even higher input signal definitions.

The sending of the output of the twelve sub-samples per input channel toward a control card is driven by output clocks 19a, 19b, 19c and 19d which activate the sample latches 18ra, 18rb, 18rc, 18rd, 18ga, 18gb, 18gc, 18gd, 18ba, 18bb, 18bc, 18bd for the correct sending of the sub-samples on respective output lines 20ra, 20rb, 20rc, 20rd, 20ga, 20gb, 20gc, 20gd, 20ba, 20bb, 20bc, 20bd once they have been read from their respective memory locations.

Conveniently, the memory components used are high-speed static VDRAMs and have been chosen due to their easy commercial availability without the current limitations imposed on dynamic memories.

The memories are organized on the memory card into groups of four banks for each color in order to completely store the 768 by 1024 samples divided as previously mentioned.

The output control card comprises at least twelve input terminals 20ra, 20rb, 20rc, 20rd, 20ga, 20gb, 20gc, 20gd, 20ba, 20bb, 20bc, 20bd which are connected to peak samplers 21ra, 21rb, 21ga, 21gb, 21ba, 21bb. The connection of the input terminals to the peak samplers is particularly important, since it allows, in cooperation with other components described hereinafter, to convert the video standard output by the graphics signal, which as mentioned is 768 by 1024, into the television standard, i.e., by way of example for PAL, to 580 lines.

The conversion ratio is obviously smaller than one to one, since the graphics signal arriving from a computer is not interlaced, whereas the PAL-type signal is interlaced, so that it is necessary to interlace the lines to pass from the RGB standard to the PAL standard (or to the NTSC standard or to other similar standards).

The connection between the input terminals 20ra, 20rb, 20rc, 20rd, 20ga, 20gb, 20gc, 20gd, 20ba, 20bb, 20bc, 20bd to the peak samplers 21ra, 21rb, 21ga, 21gb, 21ba, 21bb provides the connection of the inputs 20ra and 20rc to the peak sampler 21ra, the connection of the inputs 20rb and 20rd to the peak sampler 21rb, the connection of the inputs 20ga and 20gc to the peak sampler 21ga, the connection of the inputs 20gb and 20gd to the peak sampler 21gb, the connection of the inputs 20ba and 20bc to the peak sampler 21ba, the connection of the inputs 20bb and 20bd to the peak sampler 21bb. The peak samplers compare the outputs of the volatile memories in pairs and output the highest of the received values, so as to eliminate any danger of image flicker in the chosen television standard.

The selected signals are sent by the peak samplers 21ra, 21rb, 21ga, 21gb, 21ba, 21bb under the controls of sampling controllers 22a, 22b. The peak samplers are connected in pairs to interlace selectors 23r, 23g and 23b; specifically, the peak samplers 21ra, 21rb are connected to the interlace selector 23r, the peak samplers 21ga, 21gb are connected to the interlace selector 23g and the peak samplers 21ba, 21bb are connected to the interlace selector 23b.

Conveniently, the circuitry described above forms a flicker reduction system, since it combines four input lines into a single output line, reducing the vertical resolution of the image. This sacrifice, however, is much smaller than having image flickering on the screen which does not allow to obtain a satisfactory final television picture.

The interlace selectors 23r, 23g and 23b select the sample to be output under the control of a field selector 24 and output it on respective output terminals 25r, 25g and 25b toward video conversion means.

The video conversion means comprise a card provided with three inputs 25r, 25g and 25b for each channel. Each input leads to a digital/analog (D/A) converter 26r, 26g and 26b, each of these D/A converters being controlled, for signal output, either by a composite sync 27 or by an output clock 28. The outputs 29r, 29g and 29b of the D/A converters 26r, 26g and 26b constitute a CCIR RGB video signal with a dimensional resolution equal to that of video standards. These outputs constitute the RGB output of the conversion device according to the invention.

The outputs 29r, 29g and 29b are furthermore input in a video converter 30 which is either an RGB-PAL converter or an RGB-NTSC converter or a converter between the RGB standard and any standard. However, this converter converts signals with equal resolution and cannot be used alone to perform the above described operations at the cost of losing a considerable amount of information, as described above.

In order to perform a correct conversion, the video converter 30 receives, on inputs which are separate from the preceding ones, a chroma subcarrier 31 and the composite sync 27. The signal output by the video converter 30 is filtered by a set of three low-pass filters 32p, 32y and 32c, which ensure that the output signal has the optimum passband characteristics for recording said signal for the low-pass filter 32p with PAL output and for the low-pass filter 32y with Y/C output, i.e. signals in the S-VHS standard, since often there are video recorders which have passband problems, especially in the upper region of said passband. As regards the low-pass filter 32c, it outputs a signal in the composite standard for composite monitors, which also have problems similar to those of the above mentioned recorders.

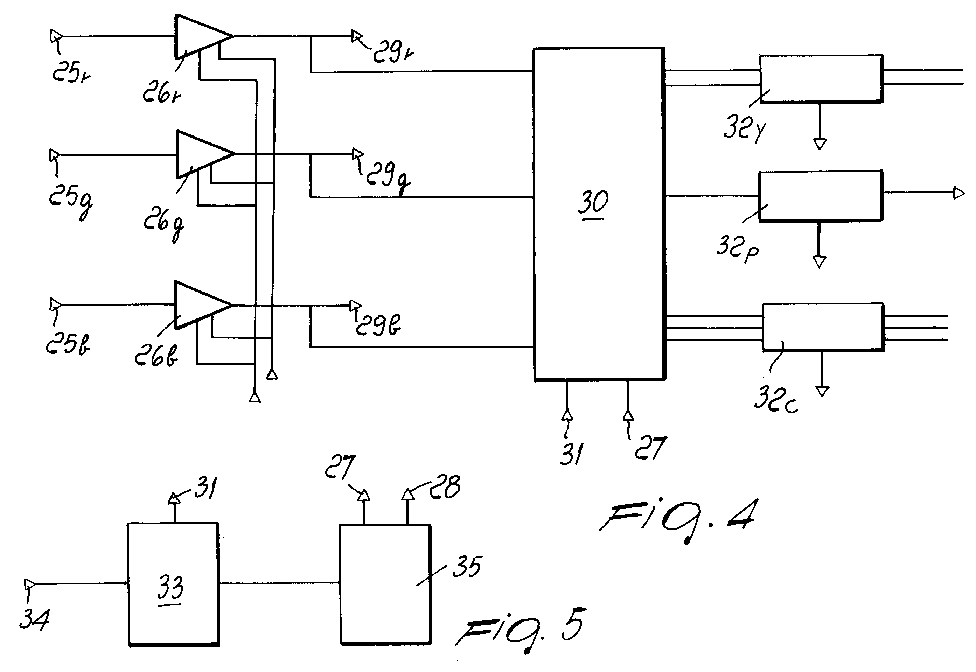

The circuit of figure 5 is provided in order to generate the chroma subcarrier 31, the composite video sync signal 27 and the output clock 28, and has a chroma phase corrector 33 which receives as input an initial pulse or black burst 34 and generates both the chroma subcarrier 31 and a signal which is input to an output sync generator 35 which generates the composite video sync signal 27 and the output clock 28.

The black burst 34 produces, in the chroma phase corrector 33, the synchronization of the phase of the color subcarrier as a function of the phase provided to the device according to the invention by a television studio, or even by recording means, if they have this function. This advantageously allows to mix the output of the device according to the invention with any other signal or source of television images, such as for example live pictures, non-synthesized images and titles or subtitles.

The output sync generator 35 generates the horizontal and vertical timings required for generating the output video addresses. The generator 35 can be controlled, as in this case, by a signal which is internal to the device or can be connected to an external sync signal.

An address generator card is used to generate the necessary volatile memory or RAM addresses used in the above described volatile memory card. The address generator card receives as inputs the composite video sync signal 27 and the output clock 28, which constitute the inputs for an output address clock 36 which breaks up the composite video sync signal 27 into two parts. These two parts, which are termed horizontal output 37 and vertical output 38, are used respectively to increase a horizontal address counter at the end of each output sample line and to reset the output address counter at the end of each output field.

The output clock signal 28, the horizontal output signal 27 and the vertical output signal 38 constitute the inputs for an output address generator 39 which contains the memory address counters of the display RAM, which indicate the origin of each output pixel. The memory addresses are separated into four distinct banks which form the RAM memory on the memory card as described above. The output address generator 39 furthermore generates the field selection signal 24 and the memory addresses 17a, 17b, 17c and 17d described above, as well as an output sample latch control signal 40. This output sample latch control signal 40 is input to a sample latch control generator 41 which generates the output clock signals 19a, 19b, 19c and 19d described above.

An appropriate generator is provided in order to generate the addresses for input to the volatile memory, and is composed of a sync detector 42 and of a sync separator 43. The sync detector 42 receives in input a horizontal sync signal 44 and a vertical sync signal 45, which are used by the sync detector 42 to generate a horizontal input signal 46, a vertical input signal 47 and an input clock signal 48.

The sync separator 43 receives in input the composite video sync signal 27 and also generates a set of three input signals: a horizontal input signal 49, a vertical input signal 50 and an input clock signal 51. The horizontal input signals 46 and 49, the vertical input signals 47 and 50 and the input clock signals 48 and 51 are input to an input address generator 52, which generates the memory address signals 17a, 17b, 17c and 17d described above and an input sample latch control signal 53. This last signal constitutes the input for a clock generator 54 which generates the input clock signals 15a, 15b, 15c and 15d and the signal of the sampling clock 11 as described above.

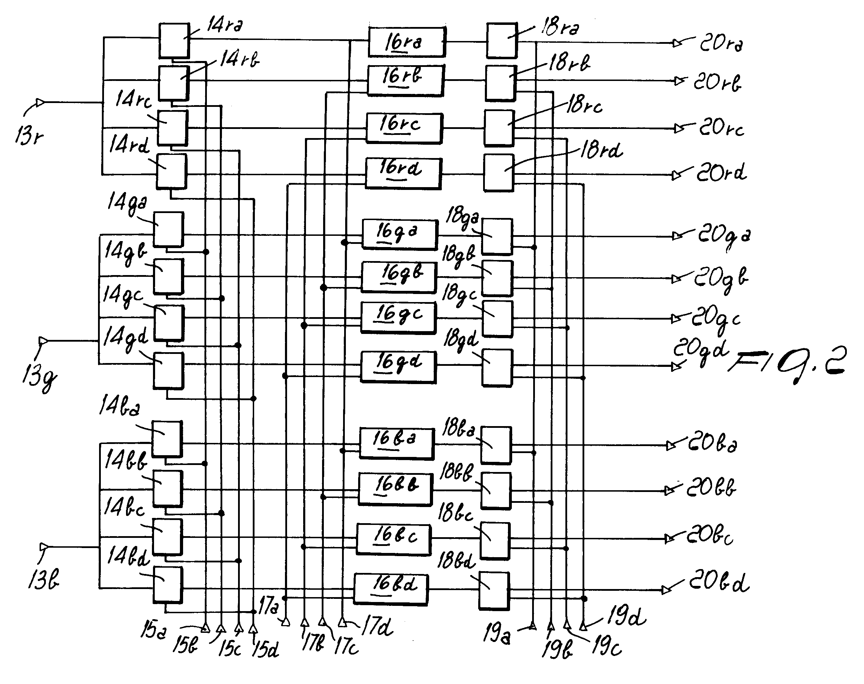

From the above description it is apparent that the memory address signals 17a, 17b, 17c and 17d are generated by two different means for different purposes. In fact, with reference to figure 2, when the writing of input subsamples occurs, the input clock signals 15a, 15b, 15c and 15d and the memory address signals 17a, 17b, 17c and 17d are activated in order to write the samples to memory; whereas when the data arriving from memory is output, the output clock signals 19a, 19b, 19c and 19d and the memory address signals 17a, 17b, 17c and 17d are activated so as to read the samples from memory. In practice, in the communications bus the lines related to the two methods for generating the memory address signals 17a, 17b, 17c and 17d are combined, but their logical meaning and their particular activation depend exclusively on the accompanying signals, i.e. either on the input clock signals 15a, 15b, 15c and 15d or on the output clock signals 19a, 19b, 19c and 19d. Potential bus conflicts related to the memory clock signals 17a, 17b, 17c and 17d are also avoided in this manner.

A multiplexer 55 furthermore receives in input the horizontal sync signal 44, the vertical sync signal 45 and the composite video sync signal 27, and sends a two-component signal to the bus of the processing means of the device according to the invention: the first component, identified by the reference numeral 56, is in analog form, whereas the second one, identified by the reference numeral 57, is in digital form and is converted by an analog/digital converter 58. These signals 56 and 57 allow the processing means, constituted by a microprocessor 60, as will become apparent hereinafter, to directly acquire the sync format of the particular graphics station (not illustrated) which is connected to the device and therefore allows to reconfigure the device, or rather to modify the timings, or rather the clocks, as they were referenced above, of the entire device. This process, as described in greater detail hereinafter, is completely automatic and requires no intervention on the part of users.

A processing card comprises the microprocessor 60, which is connected to a system clock 61 and to an interrupt controller 62. These last are necessary for the operation of the microprocessor, which is preferably a microprocessor of the 8-bit Z80 family, but nothing prevents the execution of cards which provide the same functions with other types of microprocessor, even belonging to different families and having processing words of different lengths. A volatile memory 65 and a read-only memory 66 are connected to the microprocessor 60 by means of an address signal line 63 and a data acquisition or write line 64. The volatile memory 65 or RAM contains the data related to the configuration provided by the system, whereas the read-only memory or ROM 66 contains program-based control means both for providing the automatic or manual configuration of the device according to the invention and for the management of the entire device. In order to prevent losses in the RAM 65, the RAM is powered, which the device is not powered, by means of a backup battery 67 connected thereto. The microprocessor 60 is furthermore connected, by means of an input/output bus 70, to a keypad interface 68 which controls and drives the keypad 69. The same bus 70 is furthermore connected to a display interface 71, which controls and manages the message display 72. The processing card furthermore comprises a phase conversion oscillator 73 which receives in input the input sync 56 and generates a clock signal 74 at 100 megahertz which controls the entire device according to the invention, eliminating the typical phenomenon of the jitter of each pixel of the output image.

The volatile memory or RAM 65 contains the information related to the configuration of the device both for input, as regards the connected workstations, and for output, i.e. the connectable television stations. The configurations which can be stored for the stations, or rather the users, in output are preferably equivalent to 30 stations, but by expanding the RAM with the addition of memory elements it is possible to reach a number equal to 60 display stations or signal recording stations in output from the device according to the invention.

Advantageously, the PAL converter 30 comprises three different circuits, which are necessary on one hand for the conversion of the RGB code into a PAL television signal and on the other for generating the correct chroma and luminance carriers for the different outputs described above.

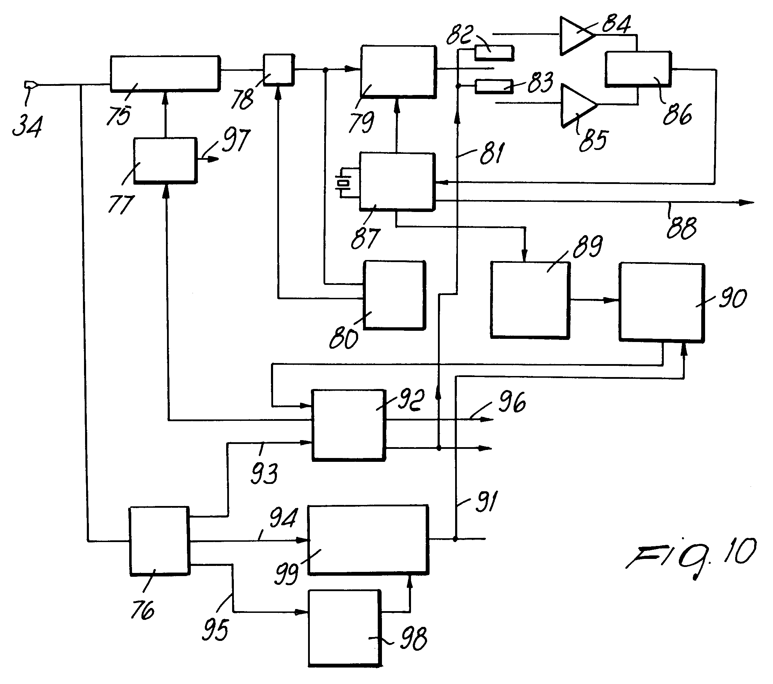

A first component circuit of the PAL converter 30 is illustrated in figure 10, and is a sync generation and lock circuit which receives in input the initial pulse or black burst 34, which is input to a chroma carrier filter 75 and to a sync separator 76, since the black burst 34 contains, in a single signal, information related both to the luminance carrier and to the vertical and horizontal sync signals; the chroma carrier filter 75 also receives in input a signal which arrives from a burst gate 77, as will become apparent hereinafter. The output of the chroma carrier filter 75 is input to a converter 78, the output whereof is input to both a phase demodulator 79 and a burst level controller 80. This controller 80 generates an output signal which controls the converter 78.

The phase demodulator 79 produces an output signal which, in a mutually exclusive manner as a function of a half-sync signal 81, as will become apparent hereinafter, is connected by switches 82 and 83 to amplifiers 84 and 85, the outputs whereof are inputs for a comparator 86 which generates a voltage signal which is representative of the phase error in order to correctly drive a quartz reference oscillator 87.

The quartz reference oscillator 87 has a proper frequency of 4.43 megahertz and produces a signal which is input to the phase demodulator 79, another output signal 88 at the proper frequency and a last signal at the frequency of 8.86 megahertz, which is input to a counter divider 89. The counter divider 89 generates a signal which is input to a shift circuit 90 which shifts the signal by 25 hertz. The shift circuit 90, as will become apparent hereinafter, also receives in input a vertical sync signal 91 and outputs a horizontal half-sync signal toward a horizontal sync phase lock loop 92.

The sync separator 76 extracts from the input signal 34 a horizontal sync signal 93, a vertical sync signal 94 and a field signal 95. The horizontal sync signal 93 is input to the horizontal sync phase lock loop 92, together with the already mentioned horizontal half-sync signal. The horizontal sync phase lock loop 92 generates three signals: the horizontal half-sync signal 81, which is output from the circuit and also drives the switches 82 and 83, a horizontal sync signal 96 and a signal for driving the burst gate 77. The burst gate 77 furthermore emits a logical gate signal 97.

The field signal 95 is input to a field detector 98, which sends an output signal toward a vertical line counter 99 which also receives in input the vertical sync signal 94 from the sync separator. The vertical line counter 99 generates the vertical sync signal 91, which is arranged both in output and in input to the shift circuit 90.

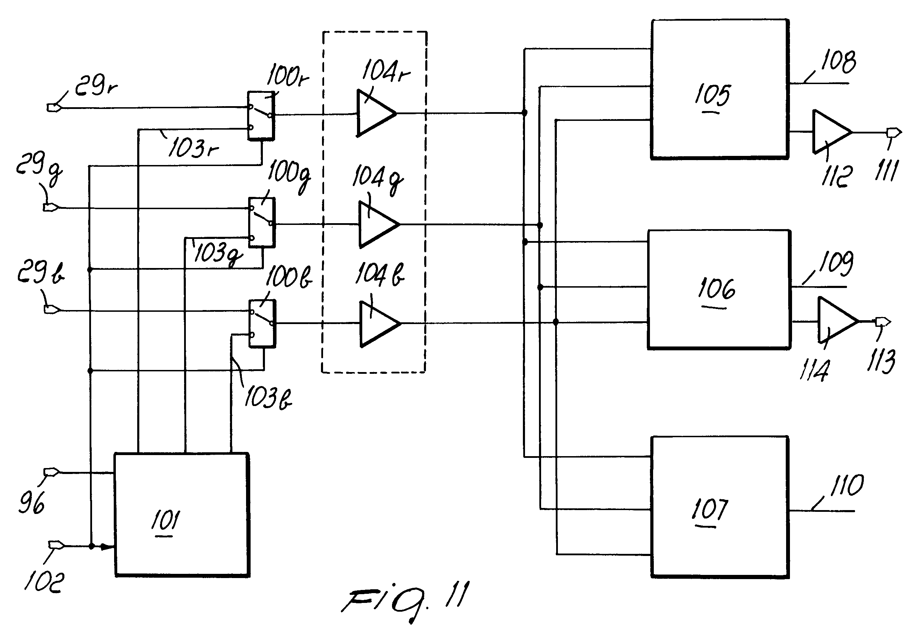

The color test matrix circuit is illustrated in figure 11 and comprises the three input signals 29r, 29g and 29b, which are input to switches 100r, 100g and 100b. The circuit furthermore comprises a frame generator 101 which receives as inputs the horizontal sync 96 and an enable signal 102 from the microprocessor 60. The enable signal 102 is furthermore connected to the switches 100r, 100g and 100b so as to enable them for passing from normal operation to test operation. The frame generator 101 generates signals 103r, 103g and 103b which are input to the switches 100r, 100g and 100b. If the enable signal 102 has an adequate logical value, then it enables the frame generator 101 and the switches 100r, 100g and 100b to obtain a frame color test; otherwise, if the enable signal 102 has a logical value opposite to the preceding one, the input signals 29r, 29g and 29b pass the switches 100r, 100g and 100b intact.

The signals in output from the switches 100r, 100g and 100b are input to respective amplifiers 104r, 104g and 104b. The signals in output from said amplifiers are input to three matrix elements: a B-Y matrix encoder 105, an R-Y matrix encoder 106 and a luminance matrix encoder 107.

The B-Y matrix encoder 105 produces two signals: the first one is a video signal 108, which is used as described hereinafter, and the second one is a B-Y output video signal 111 which is amplified by an amplifier 112. The R-Y matrix encoder 106 produces two signals: the first one is a video signal 109, which is used as described hereinafter, and the second one is an output R-Y video signal 113 which is amplified by an amplifier 114; the luminance matrix encoder 107 emits a luminance signal 110 which is used as described hereinafter.

The circuit for generating the luminance and chroma carriers comprises a luminance sub-circuit and a chroma sub-circuit.

The luminance sub-circuit comprises a 150-nanosecond filter 115 which receives in input the luminance signal 110, and comprises a 250-nanosecond filter 116 which receives in input the vertical sync signal 91 and the horizontal sync signal 96. The two signals are then input to an amplifier 117 by means of a wired OR. The output of the amplifier 117 constitutes the luminance signal 128 for the S-VHS standard.

The chroma sub-circuit comprises a first modulator 118, which receives as input signals the signal 88 at the frequency of 4.43 megahertz, the logic gate signal 97 and the horizontal half-sync 81. The first modulator 118 generates an output signal which, after being amplified by the amplifier 119, constitutes the black burst signal 34.

The chroma sub-circuit furthermore comprises a second modulator 120 which receives as inputs the signal 88 at the frequency of 4.43 megahertz and the B-Y video signal 108, and starting from these signals it generates an output signal 121.

The chroma sub-circuit finally comprises a third modulator 122 which receives as inputs the R-Y video signal 109, the horizontal half-sync 81 and the signal 88 at the frequency of 4.43 megahertz, the latter ones being received after passing through a respective 90° phase shifter 123. The third modulator 122 generates an output signal 124 starting from the signals received as inputs.

The two signals 121 and 124 constitute the inputs for a transformer/modulator 125 which generates a signal which, subsequently filtered by a bandpass filter 126 and amplified by an amplifier 127, constitutes the output chroma signal 129 for the S-VHS standard.

If the signals 128 and 129, i.e. the luminance and chroma signals, are added by means of a wired OR, they provide the PAL-standard output signal 130.

Furthermore, since all the above described cards have a standard bus, and preferably a VME bus, they can all be easily inserted in electronic computers which have an identical internal connection bus, increasing the performance of this computer and thus eliminating the need for cabinets outside the computer. However, in this manner the device is associated with a single computer and its versatility is lost.

The program-based control means comprise the following steps for the automatic recognition of the input video signal source:

horizontal step, in which the period of a horizontal video line is determined from an input horizontal sync signal;

line step, in which the number of horizontal lines in a frame or in a vertical field is determined, this last selection depending on whether the input signal is interlaced or not;

calculation step, in which the number of pixels and the number of active lines of the unknown input station are calculated;

modification step, in which the operator can modify the following parameters:

1. number of active lines;
2. number of horizontal pixels;
3. vertical blanking values;
4. Front and back porch blanking periods.

As regards the output, the program-based control means comprise a configuration step, in which the operator enters the data related to the stations used, be they display stations, such as television monitors or the like, or recording stations, for each individual output channel. The entry of these data is facilitated by a preset series of monitors or recorders stored in the non-volatile memory of the microprocessor, which can be viewed in sequence and be selected by the operator among the proposed list. A password protection system is furthermore provided to prevent tampering with the stored data on the part of unauthorized personnel.

In any case, the modifications of the configuration advantageously do not require the intervention of specialized personnel, since the configurations are selected from a monitor, if they are already preset, or are entered directly by the operator without having to intervene on the hardware, whereas most scan converters in use currently have a fully hardware-based reconfiguration system which forces intervention on the part of a specialized technician who must operate directly on the hardware part of the machine.

It has been observed that the device according to the invention achieves the intended aim and objects, furthermore obtaining an extremely versatile system, furthermore improving its versatility and allowing an extremely easy use thereof, especially as regards its initial configuration and reconfiguration, to any operator, simultaneously improving the quality of the produced image and furthermore allowing to use a large number of output stations simultaneously connected to the device according to the invention.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Color graphics conversion device particularly for converting video signals output by graphics stations into television signals, which comprises a cabinet which has at least one input connector, a plurality of output connectors and at least one serial connector for connection to electronic computers for driving said device, a keypad for data entry on the part of an operator and a message display, said cabinet accommodating a power supply of a mother board provided with a standard connection bus, said connection bus comprising a plurality of connection slots for standard-format cards, each card being provided with a respective standard finger connector for connection to said slots, characterized in that it comprises at least one analog sample card which comprises at least three sampling lines, one for each primary color of at least one signal in input on said input connector, said analog sample card emitting at least three output signals which constitutes the input to a memory card, said memory card comprising a plurality of volatile memory elements for storing said signals in input to said memory card, said volatile memory elements being driven by means for addressing said signals, said memory card emitting at least twelve output signals toward an output control card which, starting from said at least twelve input signals, is suitable for processing at least three output signals in the primary colors, emitting them toward video conversion means, processing means being provided, said processing means being connected to said connection bus and to nonvolatile memory elements within which means for the program-based control of said cards and configuration means for said at least one input connector and for said plurality of output connectors are stored.

2. Device according to claim 1, characterized in that said video conversion means comprise at least one video conversion card which comprises at least one input which comprises three terminals for said input signals, means for converting from a graphics standard to another graphics standard being provided for each input signal ahead of television and composite conversion means for converting the graphics signal into a signal in a television standard, in a composite standard or in a video recording standard.

3. Device according to the preceding claims, characterized in that said analog sample card comprises, for each input channel, a selectable signal termination after which a buffer voltage divider is connected, said divider being connected to a high-pass filter, said high-pass filter being suitable for filtering the signal in transit in the channel to transfer it to an analog/digital converter suitable for converting said input signal from an analog form to a digital form, said digital signal being input to a peak sampler, said analog/digital converter and said peak sampler being driven by a sampling clock at a preset frequency which depends on the horizontal sync of the input signal, each peak sampler being connected to a respective sample latch suitable for transmitting said digital signal to said memory card.

4. Device according to one or more of the preceding claims, characterized in that said memory card comprises at least three terminals for each input channel, each of said terminals receiving said digital signal from said analog sample card, each input being divided into four sub-signals by respective dividers, said dividers being controlled by respective input clocks, each divider being connected to an address generator which is suitable for writing each sub-signal in a memory location under the control of respective memory addresses, said address generators constituting said memory addressing means and being furthermore suitable for reading from memory addresses each sub-signal under the control of said memory addresses and to transmit them toward respective sample latches which are suitable for transmitting said sub-signal toward respective output lines toward said output control card.

5. Device according to one or more of the preceding claims, characterized in that said output control card comprises, for each input, a pair of peak samplers and an interlace selector which are suitable for reconstructing a digital output signal starting from the portions of digital signal arriving from said sets of four inputs, and to output it toward said video conversion means.

6. Device according to one or more of the preceding claims, characterized in that it comprises a control card which comprises a microprocessor, to which a system clock and an interrupt controller for the management of said microprocessor are connected, a volatile memory which contains data related to the configuration of the input graphics signal and to the output television station, said volatile memory having a protection backup battery, a nonvolatile memory which contains program-based control means for the configuration of both the input graphics station and of the output television stations, said microprocessor being furthermore connected to a communications bus to which a keypad interface, connected to said keypad, and a video interface, connected to said display, are connected.

7. Device according to claim 6, characterized in that said control card comprises a phase conversion oscillator which receives in input the sync of said graphics signal and processes a signal at a preset sampling frequency.

8. Device according to one or more of the preceding claims, characterized in that it comprises a memory address generator card which comprises an input sub-section and an output sub-section, said input sub-section being suitable for generating said input clock signal and said memory addresses, said output sub-section being suitable for generating said memory addresses and said output clocks for said memory card.

9. Device according to one or more of the preceding claims, characterized in that said cards can be inserted in electronic computers provided with a bus which is equal to that of the finger connectors of said cards.

10. Device, according to one or more of the preceding claims, characterized in that it comprises a card for converting a graphics video signal into a television standard, said card comprising at least three inputs for each channel and a converter for converting the graphics video signal into said television standard, said converter having at least three outputs, each output having a low-pass filter suitable for adapting the output signal to the characteristics of means for recording and/or displaying said output signal.

11. Device according to one or more of the preceding claims, characterized in that said graphics signal/television standard converter comprises a sync generation and lock circuit which is suitable for generating sync signals starting from a reference signal input to said circuit and by at least one oscillator at a preset frequency, said converter comprising a color test matrix which is suitable for generating signals in a video recording standard starting from color reference signals produced by said output control card, said sync generation and lock circuit and said color test matrix circuit being connected to a circuit for generating the luminance and chroma carriers, said latter circuit being suitable for generating a television signal in a preset standard starting from said sync signals and from said signals in a video recording standard.

12. Process for recognizing graphics stations, characterized in that it comprises the following steps:
   horizontal step, in which the period of a horizontal video line is determined from an input horizontal sync signal;
   line step, in which the number of horizontal lines in a frame or in a vertical field is determined, this last selection depending on whether the input signal is interlaced or not;
   calculation step, in which the number of pixels and the number of active lines of the unknown input station are calculated;
   modification step, in which the operator can modify the following parameters:
   number of active lines;
   number of horizontal pixels;
   vertical blanking values;
   front and back porch blanking periods.

13. Device according to one or more of the preceding claims, characterized in that said graphics station recognition process is comprised within said program-based control means.

Fig. 1

EP 0 483 467 A2

FIG.2

EP 0 483 467 A2

FIG. 3

Fig. 4

Fig. 5

Fig.7

Fig.6

EP 0 483 467 A2

67

64

60

66

61

63

65

72

71

70

62

68

69

Fig. 8

56

73

74

Fig. 9

Fig. 10

Fig. 11

EP 0 483 467 A2

Fig.12